# EUROPÄISCHE PATENTSCHRIFT

(11) **EP 1 182 088 B1**
(45) Veröffentlichungstag und Bekanntmachung des Hinweises auf die Patenterteilung: **03.12.2003**
(21) Anmeldenummer: 01117753.2
(22) Anmeldetag: 31.07.2001
(51) Int. Cl.: B60R 13/08, B29C 44/56, B60J 10/00

(54) **Dichtungsformteil und Verfahren zu dessen Herstellung**
Sealing component and method to manufacture the same
Elément d'étanchéité et procédé pour sa fabrication

(30) Priorität: 22.08.2000 DE 20014459 U
(43) Veröffentlichungstag der Anmeldung: 27.02.2002
(73) Patentinhaber: Odenwald Chemie GmbH, 69250 Schönau (DE)
(72) Erfinder: Augele, Hans-Peter, 69118 Heidelberg (DE); Peine, Andreas Dr., 69151 Neckargemund (DE); Drumm, Andreas, 69256 Mauer (DE)
(74) Vertreter: Müller, Frank Peter, Dipl.-Ing.

(56) Entgegenhaltungen:
- FR-A- 2 796 903
- GB-A- 2 095 159
- US-A- 3 093 443

## Beschreibung

Die Erfindung betrifft ein Dichtungsformteil aus geschlossenzelligem Schaumstoff nach Anspruch 1 sowie ein Verfahren zu dessen Herstellung nach Anspruch 9.

Es ist bereits bekannt, zum Abdichten von Räumen, beispielsweise den Fahrgastraum eines Automobils, gegen Einfall von starkem Lärm, beispielsweise aus dem Motorraum, Dichtungsformteile aus PUR-Integralschaum herzustellen. Dabei wird der Schaum unmittelbar in der Form aufgeschäumt, aus der der fertige Dichtungsformteil, beispielsweise ein Armaturenbrett, nach weitgehendem Erkalten entformt wird. Ein solcher Integralschaum weist eine äußere Haut auf, welche die im wesentlichen steife Schaumstoffstruktur gegen Eindringen von Feuchtigkeit im wesentlichen abschirmt.

Darüber hinaus sind auch Dichtungsformteile aus offenzelligem Schaumstoff bekannt. Da diese leicht Wasser und andere Fremdstoffe aufnehmen können, ist es vielfach erforderlich, den Schaumstoff mit einer zusätzlichen dichtenden Abdeckschicht z.B. einer Folie zu überziehen.

Der Erfindung liegt die Aufgabe zugrunde, ein Verfahren zur Herstellung und einen Dichtungsformteil anzugeben, der eine zusätzliche Abdeckschicht nicht benötigt, dennoch gute Abdichtfunktionen insbesondere gegen Zugluft, Staubluft, Wasser und Gasen aufweist und für zahlreiche Anwendungsfälle, d.h. in sehr unterschiedlichen Formgestaltungen, ohne großen Herstellungsaufwand herstellbar ist.

Die Erfindung ist in den Ansprüchen 1 und 9 gekennzeichnet.

Es hat sich gezeigt, daß ein Schaumstoff eines Raumgewichts zwischen 50 und 250 kg/m³, insbesondere zwischen 60 und 90 kg/m³, und einer Druckfestigkeit nach DIN 53421 bei 10% Stauchung von weniger als 80 kPa, insbesondere von bis zu 15 kPa, d.h. Weichschaum und Leichtschaum besonders gut geeignet ist.

Besonders bevorzugt werden im wesentlichen elastomere Schaumstoffe aus vor allem EPDM (Ethylen/Propylen-Dien-Terpolymer), SBR (elastomeres Copolymer aus Styrol und Butadien) und NBR (Acrylnitril-Butadien-Kautschuk). An sich ist es bekannt, EPDM zu Dichtungszwecken in Form von homogenen Gummistreifen zu verwenden, die im Extrusionsverfahren hergestellt sind.

Die Bruchdehnung sollte mehr als 150%, die Zugfestigkeit mehr als 200 kPa und die Zerreißfestigkeit mehr als 0,5 kN/m aufweisen.

Besonders bevorzugt sind solche Dichtungsformteile, die in einer Form thermoverformten schichtartigen Schaumstoffs bestehen. Die Herstellung erfolgt insbesondere auf folgende Weise:

Zuerst wird aus einem Schaumstoffblock eine Anzahl von Schichten oder Streifen durch Zerteilen des Blockes auf dem Wege des Ausschneidens, Abspaltens oder Ausstanzens zu sogen. "Rohlingen" hergestellt.

Danach werden die einzelnen Rohlinge je in eine dem endgültigen Dichtungsformteil im wesentlichen entsprechende Form eingelegt.

Nach Schließen der Form wird diese mit dem eingelegten Rohling so erwärmt, daß sich dieser bleibend verformt und die Einzelschicht bzw. der Einzelstreifen die endgültige Formgestalt des Dichtungsformteils annimmt und nach dem Entformen im wesentlichen, vom "Entspannen" abgesehen, beibehält.

Das bevorzugte Herstellungsverfahren für einen erfindungsgemäßen Dichtungsformteil erfolgt also nicht in situ durch Aufschäumen des Schaumstoffmaterials in der Form und auch nicht durch Strangpressen (Extrudieren), sondern in einem mehrstufigen Verfahren aus den o.g. Rohlingen. Es hat sich gezeigt, daß das Raumgewicht des entformten Dichtungsformteils etwas größer ist als das Raumgewicht des in die Form eingelegten Rohlings, was auf eine Verdichtung zurückgeführt werden könnte.

Die Temperatur beim Erwärmen der Form und der Rohlinge befindet sich bevorzugt zwischen 120 und 180, insbesondere zwischen 140 und 160C°. Es wird angenommen, daß beim Verformen auch eine gewisse "Thermoplastizität" zur Wirkung gelangt, also eine Art "Zwitterstruktur" zwischen elastomeren und thermoplastischen Eigenschaften des verwendeten Schaumstoffs vorliegt.

Erfindungsgemäße Dichtungsformteile sind sehr gut zur Aufgabenlösung geeignet. Sie zeigen sogar verhältnismäßig hohe Dämmwerte im Falle einer akustischen Dichtungsfunktion. Sie lassen sich auch gut als Dichtungsstreifen, Dichtungsmanschette oder dergl. dreidimensionaler Formteile auch bei dynamischen Beanspruchungen (Öffnen und Schließen einer Wagentür) zum Abdichten gegen Feuchte, Flüssigkeiten und Gase verwenden.

Eine bevorzugte Ausführungsform der Erfindung wird in den Zeichnungen 1 und 2 gezeigt. Dabei zeigen
- Figur 1: ein erfindungsgemäßes Formteil nach dem Formen, und
- Figur 2: eine Schnittdarstellung durch Figur 1.

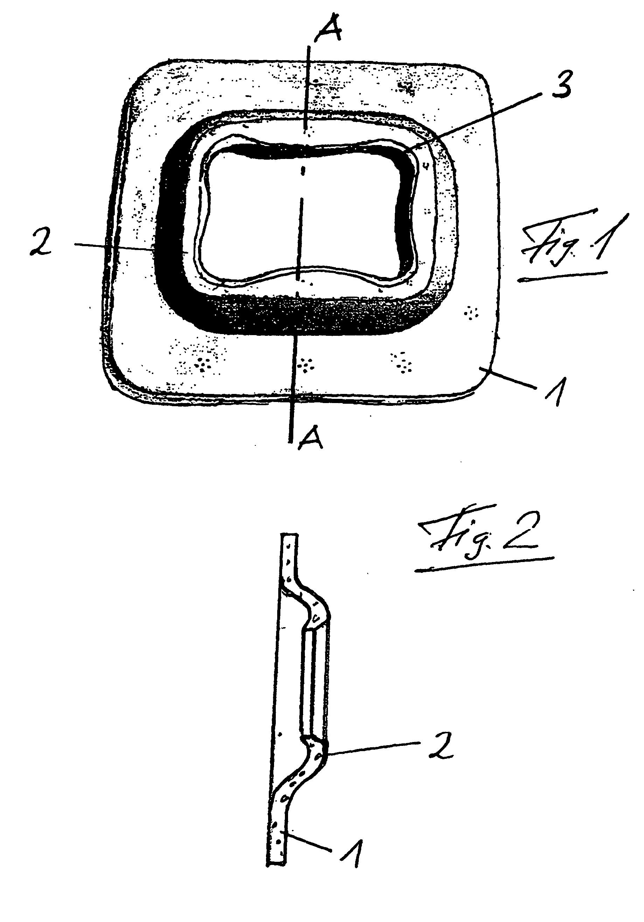

Figur 1 zeigt ein erfindungsgemäßes Dichtungsformteil 1 nach dem Formen. Das Dichtungsformteil besteht aus geschlossenzelligem Schaumstoff, der entsprechend der Anwendung in eine für diese Anwendung geeignete Form thermoverformt wurde. Skizzenhaft ist dabei eine Wulst 2 in in etwa rechteckförmiger Form mit Rundungen 3 gezeigt, die sich an beispielsweise Metallöffnungen anlegen, um diese abzudichten.

Figur 2 zeigt den Schnitt A-A nach Figur 1. Die Wulst 2 ist hier im Querschnitt gut sichtbar. Der geschlossenzellige Schaumstoff ist durch kleine Punkte angedeutet. Der bsp. als Dichtungsmanschette ausgeformte Schaumstoff hat aufgrund seiner geschlossenzelligen Struktur eine gute Abdichtfunktion insbesondere gegen Zugluft, Staubluft, Wasser und Gasen und benötigt keine zusätzliche Abdeckschicht.

## Patentansprüche

1. Dichtungsformteil aus geschlossenzelligem Schaumstoff,
**dadurch gekennzeichnet,**
**daß** der Schaumstoff ein Raumgewicht zwischen 50 und 250 kg/m³ und eine Druckfestigkeit bei 10% Stauchung von weniger als 80 kPa aufweist.

2. Dichtungsformteil nach Anspruch 1,
**dadurch gekennzeichnet,**
**daß** der Schaumstoff ein Raumgewicht zwischen 60 und 90 kg/m³ aufweist.

3. Dichtungsformteil nach Anspruch 1 oder 2,
**dadurch gekennzeichnet,**
**daß** der Schaumstoff eine Druckfestigkeit von bis zu 15 kPa aufweist (Weichschaum).

4. Dichtungsformteil nach einem der vorhergehenden Ansprüche,
**dadurch gekennzeichnet,**
**daß** der Schaumstoff im wesentlichen aus elastomerem Material besteht.

5. Dichtungsformteil nach Anspruch 4,
**dadurch gekennzeichnet,**
**daß** der Schaumstoff aus EPDM, SBR und/oder NBR besteht.

6. Dichtungsformteil nach einem der vorhergehenden Ansprüche,
**dadurch gekennzeichnet,**
**daß** der Schaumstoff eine Bruchdehnung von mehr als 150% und/oder daß der Schaumstoff eine Zugfestigkeit von mehr als 200 kPa aufweist.

7. Dichtungsformteil nach einem der vorhergehenden Ansprüche,
**dadurch gekennzeichnet,**
**daß** der Schaumstoff eine Zerreißfestigkeit von mehr als 0,5 kN/m aufweist.

8. Dichtungsformteil nach einem der vorhergehenden Ansprüche,
**dadurch gekennzeichnet,**
**daß** der Schaumstoff aus einer in einer Form thermoverformtem Schaumstoffschicht oder einem solchen Schaumstoffstreifen besteht.

9. Verfahren zur Herstellung eines Dichtungsformteils nach einem der vorhergehenden Ansprüche, bei dem das Dichtungsformteil in einer Form in die endgültige Formgestalt gebracht wird,
**gekennzeichnet durch**
folgende Verfahrensschritte:
a. Herstellen des Schaumstoffs als Block,
b. Zerteilen des Blocks in einzelne Einzelschichten öder Einzelstreifen,
c. Einlegen einer Einzelschicht oder eines Einzelstreifens in die Form und
d. Schließen und Erwärmen der Form zur bleibenden Verformung der Einzelschicht bzw. des Einzelstreifens.

10. Verfahren nach Anspruch 9,
**dadurch gekennzeichnet,**
**daß** als Schaumstoff geschlossenzelliges EPDM verwendet und eine Temperatur zwischen 120 und 180°C beim bleibenden Verformen angewendet wird.

11. Verfahren nach Anspruch 9 oder 10,
**dadurch gekennzeichnet,**
**daß** die Form teilweise von einem Bauteil gebildet wird, mit dem der Dichtungsformteil nach dem Endformen ein Bauaggregat bildet.

## Claims

1. Sealing component of closed-cell plastic foam,
**characterized in**
**that** the plastic foam comprises a space weight between 50 and 250 kg/m³ and a compression strength at 10 % upsetting of less than 80 kPa.

2. Sealing component according to claim 1,
**characterized in**
**that** the plastic foam comprises a space weight between 60 and 90 kg/m³.

3. Sealing component according to claim 1 or 2,
**characterized in**
**that** the plastic foam comprises a compression strength of up to 15 kPa (soft foam).

4. Sealing component according to any of the preceding claims,
**characterized in**
**that** the plastic foam essentially consists of an elastomeric material.

5. Sealing component according to claim 4,
**characterized in**
**that** the plastic foam consists of EPDM, SBR and/or NBR.

6. Sealing component according to any of the preceding claims,
**characterized in**
**that** the plastic foam as an elongation at break of more than 150 % and/or that the plastic foam has a tensile strength of more than 200 kPa.

7. Sealing component according to any of the preceding claims,
**characterized in**
**that** the plastic foam comprises a tearing strength of more than 0.5 kN/m.

8. Sealing component according to any of the preceding claims,
**characterized in**
**that** the plastic foam consists of foam layer being hot deformable in a mould or such a foam strip.

9. Method for producing a sealing component according to any of the preceding claims, wherein the sealing component is brought into its final shape in a mould,
**characterized by**
the following method steps:
a. producing the plastic foam as a block,
b. severing the block into individual layers or individual strips,
c. placing an individual layer or an individual strip into the mould, and
d. closing and heating the mould for the permanent deformation of the individual layer or, respectively, the individual strip.

10. Method according to claim 9,
**characterized in**
**that** closed-cell EPDM is used as the plastic foam and a temperature between 120 and 180°C is employed during permanent deformation.

11. Method according to claim 9 or 10,
**characterized in**
**that** the mould is partially constituted by a component with which the sealing component forms a structural aggregate after the final shaping.

## Revendications

1. Elément d'étanchéité en mousse à alvéoles fermées,
**caractérisé en ce**
**que** la mousse comprend une densité apparente entre 50 et 250 kg/m³ et une résistance à la déchirure à 10 % de refoulement de moins de 80 kPa.

2. Elément d'étanchéité selon la revendication 1,
**caractérisé en ce**
**que** la mousse comprend une densité apparente entre 60 et 90 kg/m³.

3. Elément d'étanchéité selon la revendication 1 ou 2,
**caractérisé en ce**
**que** la mousse comprend une résistance à la compression de jusqu'à 15 kPa (mousse souple).

4. Elément d'étanchéité selon l'une des revendications précédentes,
**caractérisé en ce**
**que** la mousse sensiblement consiste en une matière elastomère.

5. Elément d'étanchéité selon la revendication 4,
**caractérisé en ce**
**que** la mousse consiste en EPDM, SBR et/ou NBR.

6. Elément d'étanchéité selon l'une des revendications précédentes,
**caractérisé en ce**
**que** la mousse comprend une résistance à la traction de plus de 200 kPa.

7. Elément d'étanchéité selon l'une des revendications précédentes,
**caractérisé en ce**
**que** la mousse comprend une résistance à la déchirure de plus de 0,5 kN/m.

8. Elément d'étanchéité selon l'une des revendications précédentes,
**caractérisé en ce**
**que** la mousse consiste en une couche mousseuse déformée à chaud dans un moule ou une telle bande de mousse.

9. Procédé pour la fabrication d'un élément d'étanchéité selon l'une des revendications précédentes, dans lequel l'élément d'étanchéité est mise en forme finale dans un moule,
**caractérisé par**
les étapes suivantes:
a. production de la mousse en bloc,
b. fragmentation du bloc en couches individuelles ou en bandes individuelles,
c. mise en place d'une couche individuelle ou d'une bande individuelle dans le moule, et
d. fermeture et chauffage du moule pour la déformation invariante de la couche individuelle ou, respectivement, de la bande individuelle.

10. Procédé selon la revendication 9,
**caracterisé en ce**
**que** de l'EPDM à alvéoles fermées est utilisé pour la mousse et une température entre 120 et 180°C est employée pendant la déformation invariante.

11. Procédé selon la revendication 9 ou 10,
**caracterisé en ce**
**que** le moule est partiellement constitué par un composant avec lequel l'élément d'étanchéité constituera un agrégat de construction après le moulage final.
